# EUROPÄISCHE PATENTSCHRIFT

(11) **EP 4 058 662 B1**
(45) Veröffentlichungstag und Bekanntmachung des Hinweises auf die Patenterteilung: **01.01.2025**
(21) Anmeldenummer: 20803213.6
(22) Anmeldetag: 12.11.2020
(51) Int. Cl.: F02B 37/10, F02B 39/10, F04D 25/06, H02K 1/16, H02K 7/14, F04D 25/02, H02K 1/14, H02K 3/52, H02K 15/02, F02B 33/40, H02K 7/18

(54) **MEDIENSPALTMOTOR, INSBESONDERE FÜR EINEN TURBOLADER**
MEDIA GAP MOTOR, IN PARTICULAR FOR A TURBOCHARGER
MOTEUR À ENTREFER, EN PARTICULIER POUR UN TURBOCOMPRESSEUR

(30) Priorität: 12.11.2019 EP 19208737
(43) Veröffentlichungstag der Anmeldung: 21.09.2022
(73) Patentinhaber: G+L Innotec GmbH, 88471 Laupheim (DE)
(72) Erfinder: LÖFFLER, Rudolf, 88454 Unteressendorf (DE); GÖDEKE, Holger, 88480 Stetten (DE); HEBER, Ralf, 89155 Erbach-Ersingen (DE); SPLEISS, Bernhard, 88524 Uttenweiler (DE)
(74) Vertreter: Pfenning, Meinig & Partner mbB
(86) Internationale Anmeldenummer: PCT/EP2020/081970
(87) Internationale Veröffentlichungsnummer: WO 2021/094491

(56) Entgegenhaltungen:
- EP-A1- 0 642 210
- EP-A1- 1 995 426
- EP-A1- 2 158 387
- DE-A1- 102017 207 532
- US-A1- 2009 127 942
- US-A1- 2013 169 074
- HOLGER GÖDEKE ET AL: "HYBRID TURBOCHARGER WITH INNOVATIVE ELECTRIC MOTOR", MTZ, vol. 75, no. 3, 1 March 2014 (2014-03-01), pages 26 - 31, XP055673262

## Beschreibung

Die vorliegende Anmeldung betrifft einen Medienspaltmotor, insbesondere für einen Turbolader, nach dem Oberbegriff von Anspruch 1.

Verbrennungskraftmaschinen mit Turboladern sind aus dem Stand der Technik bekannt. In der Regel wird hierbei ein Abgasstrom aus einer Verbrennungskraftmaschine genutzt, um ein Turbinenrad anzutreiben. Dieses Turbinenrad ist beispielsweise über eine Welle mit einem Verdichterrad gekoppelt, das eine Verdichtung von in dem Brennraum zugeführter Frischluft sicherstellt. Eine solche Vorverdichtung bzw. Aufladung führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des sogenannten Turbolochs, das insbesondere beim Anfahren und Beschleunigen aus niedrigen Drehzahlen eines Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Zur Verringerung der Verzögerung und zum Zuführen einer richtigen Menge Frischluft kann es vorgesehen sein, dass der Turbolader einen Elektromotor mit Stator und Rotor aufweist, wobei ein Rotormagnet des Rotors in das Verdichterrad integriert ist. Stand der Technik verwandter Art ist beispielsweise in der Druckschrift WO 2008 141 670 A1 beschrieben.

Vergleichbare Medienspaltmotoren können Bauartbedingt einen großen Spalt zwischen Rotor und Stator aufweisen. Dies kann dazu führen, dass im Vergleich zu konventionellen Elektromotoren höhere Ströme für die Erzeugung eines Drehmoments benötigt werden. Aus diesem Grund können derartige Medienspaltmotoren nachteilhaft niedrige Drehmomentkonstanten aufweisen. Dieses Problem kann dadurch gelindert werden, dass Statorzähne oder Stege eingesetzt werden, die direkt bis an den Rotor reichen, und somit den Magnetfluss der E-Motoren verbessern. Hierbei kann durch die Statornuten, die nicht für die Wicklung genutzt werden, ein Medium transportiert werden. Stand der Technik verwandter Art beschreibt die Druckschrift EP 2 072 824 A1.

Die Druckschrift EP 0 642 210 A1 betrifft einen schnell laufenden Elektromotor. Dieser Elektromotor weist einen relativ großen Luftspalt auf und zeichnet sich nicht durch Finnen aus, die sich radial in einem zwischen dem Stator und dem Rotor ausgebildeten Strömungsraum erstrecken. Somit weist dieser Elektromotor keine von einem Medium durchflossenen Statornuten auf. Stand der Technik verwandter Art ist auch in der Druckschrift US 2013/169074 A1 beschrieben. Die Druckschrift DE 10 2017 207532 A1 beschreibt eine elektrische Medienspaltmaschine, die einen Stator und einen Rotor aufweist, der von einer Innenhülse und einer koaxial zur Innenhülse angeordneten Außenhülse umgeben ist. Zwischen Innenhülse und Außenhülse ist der einzige Strömungsweg für das Medium nur durch den Stator hindurch gebildet. Ein Strömungsraum ist somit nicht zwischen Stator und Rotor ausgebildet.

Diese Lösungsansätze können jedoch dazu führen, dass diese Motoren im bestromten Zustand eine hohen Drehmomentunförmigkeit (Torque-Rippel) sowie im Leerlauf ein hohes Rastmoment (Cogging Torque) aufweisen, die bei vielen Anwendungsgebieten wie z.B. im elektrisch unterstützten Turbolader einen Einsatz verhindern. Derartige Motoren können zudem nur geringe Leistungen erzielen, da die Stege schnell in Sättigung geraten und hohe Magnetverluste zu einer starken Erwärmung führen.

Aufgabe der vorliegenden Anmeldung ist es daher, einen verbesserten Medienspaltmotor, insbesondere für einen Turbolader, vorzuschlagen, der einerseits eine Verringerung der Verzögerung und das Zuführen einer richtigen Menge eines Mediums, insbesondere von Frischluft, gewährleistet und andererseits einen optimierten Magnetfluss und eine optimierte Entwärmung ermöglicht, wobei eine Drehmomentunförmigkeit und ein Rastmoment reduziert oder vermieden wird. Zudem soll der Medienspaltmotor hierbei einen vergleichsweise einfachen, robusten Aufbau haben und wenig störanfällig sein.

Gelöst wird diese Aufgabe durch einen Medienspaltmotor mit den Merkmalen des unabhängigen Anspruchs 1. Vorteilhafte Weiterbildungen ergeben sich mit den Merkmalen der abhängigen Ansprüche und der Ausführungsbeispiele.

Der vorgeschlagene Medienspaltmotor enthält einen Rotor und einen Stator, wobei der Stator, gegebenenfalls optional aber in besonders vorteilhafter Weise, Finnen aufweist, die sich mit einem inneren Abschnitt radial in einem zwischen dem Stator und dem Rotor ausgebildeten Strömungsraum in Richtung des Rotors erstrecken. Es ist in den meisten Ausführungen vorgesehen, dass die Finnen sich mit ihren inneren Abschnitten nicht bis zum Rotor erstrecken, sodass ein Spalt zwischen einem inneren Ende der Finnen und dem Rotor ausgebildet ist. Ein Innendurchmesser der Finnen kann optional zumindest einem 1,2-fachen und/oder höchstens einem 3-fachen eines Außendurchmessers des Rotors entsprechen. Hierbei ist der Innendurchmesser der Finnen in der Regel zu verstehen als Durchmesser eines größtmöglichen, auf der Rotorachse zentrierten Kreises, außerhalb dessen die Nuten vollständig angeordnet sind. Der Außendurchmesser des Rotors ist in der Regel zu verstehen als Durchmesser eines kleinstmöglichen auf der Rotorachse zentrierten Kreises an derselben axialen Position, innerhalb dessen der Rotor vollständig angeordnet ist. Der vorgeschlagene Medienspaltmotor weist in der Regel einen Strömungsraum auf, der zumindest teilweise oder auch vollständig durch einen insbesondere im Wesentlichen hohlzylindrischen Spalt zwischen den inneren Enden der Finnen, und insbesondere dem Rotor, und durch Statornuten zwischen benachbarten Finnen ausgebildet ist.

Durch den vorgeschlagenen Medienspaltmotor können die Drehmomentkonstanten überraschend deutlich gesteigert werden. Hierbei kann der Luftmassenstrom sowohl durch den Medienspalt zw. Rotor und Ende der Finnen als auch durch die Statornuten geführt werden, wodurch Strömungsverluste minimiert und gleichzeitig höhere Kühlleistungen durch die Ansaugluft erreicht werden. Magnetverluste, insbesondere Ummagnetisierungsverluste, können durch den vorgeschlagenen Medienspaltmotor verringert werden. Zudem sind Verluste hinsichtlich der Scheinleistung minimiert. Erfindungsgemäß werden die beschriebenen Vorteile erhalten, indem der Innendurchmesser der Finnen zumindest einem 1,2-fachen, insbesondere zumindest einem 1,4-fachen, und höchstens einem 3-fachen, insbesondere höchstens einem 2- oder 1,6-fachen, des Außendurchmessers des Rotors, beispielsweise einem 1,5-fachen, entspricht. Die Finnen können gewissermaßen die Statorzähne im Medienspalt fortsetzen und damit den Magnetfluss auf besonders vorteilhafte Weise verbessern. Es sind in dieser Anmeldung jedoch auch Ausführungen beschrieben, die unabhängig von diesem Verhältnis bereits für sich genommen vorteilhaft sind. In Bezug auf die strömungstechnischen und die magnetischen Eigenschaften des Medienspaltmotors hat es sich in überraschender Weise als besonders vorteilhaft herausgestellt, wenn der Innendurchmesser der Finnen in einer beispielhaften Ausführung zumindest einem 1,4-fachen und höchstens einem 2-fachen des Außendurchmessers des Rotors entspricht. Die beschriebenen Vorteile werden jedoch, gegebenenfalls in geringerem Maße, durch ein Größenverhältnis in einem weiteren Bereich erreicht. Dadurch, dass sich die Finnen mit ihren inneren Abschnitten nicht bis zum Rotor erstrecken, bilden diese in der Regel keine Lagerung des Rotors oder einer Rotorwelle.

Die vorliegende Anmeldung betrifft auch einen Turbolader. Der vorgeschlagene Turbolader für Verbrennungskraftmotoren kann eine Verdichteranordnung zur Verdichtung von Frischluft aufweisen. Zudem kann der vorgeschlagene Turbolader den oben oder unten beschriebenen Medienspaltmotor enthalten.

Die Verdichteranordnung kann ein Verdichterrad enthalten. Der Rotor ist in typischen Ausführungen mit dem Verdichterrad gekoppelt. Es kann vorgesehen sein, dass die Finnen einen äußeren Abschnitt aufweisen, der sich in radialer Richtung außerhalb des Strömungsraums erstreckt. Zudem kann der Stator Spulen umfassen, die die äußeren Abschnitte der Finnen umlaufen bzw. umgeben. Typischerweise ist hierbei jeder Finne eine Spule zugeordnet.

In typischen Ausführungen sind die Finnen langgestreckt und erstrecken sich in axialer Richtung. In besonders vorteilhaften Ausführungen sind im Strömungsraum zwischen den Finnen Statornuten derart ausgebildet, dass durch sie zumindest ein Teil eines Mediums strömt. Typischerweise werden die Statornuten durch den Raum zwischen den Finnen gebildet, der zum Durchströmen für das Medium zur Verfügung steht. In den von dem Medium durchströmten Statornuten sind in der Regel keine Spulen oder Wicklungen des Stators und insbesondere keinerlei feste Gegenstände angeordnet. Die Statornuten sind typischerweise beidseitig von den inneren Abschnitten der Finnen umgeben. In der Regel weisen die inneren Abschnitte der Finnen, zwischen denen die vom Medium durchströmten Statornuten angeordnet sind, eine Länge in radialer Richtung auf, die zumindest einem Drittel, insbesondere zumindest einer Hälfte oder besonders vorteilhaft zumindest zwei Drittel, einer Länge der äußeren Abschnitte in radialer Richtung entspricht, die von den Spulen des Stators umlaufen werden. Eine Ausdehnung der vom Medium durchströmten Statornuten beträgt in radialer Richtung in der Regel zumindest einem Viertel, insbesondere zumindest der Hälfte, des Außendurchmessers des Rotors, sodass der Medienspaltmotor hinsichtlich seiner magnetischen sowie strömungstechnischen Eigenschaften die beschriebenen Vorteile in besonderer Weise erreicht. In einigen Ausführungen weisen die inneren Abschnitte der Finnen einen radial inneren Bereich auf. In dem radial inneren Bereich können die inneren Abschnitte der Finnen einen verbreiterten Abschnitt aufweisen, insbesondere gegenüber einem schmaleren radial äußeren Bereich der inneren Abschnitte der Finnen. Hierbei können die von dem Medium durchflossenen Statornuten sowohl zwischen den inneren Bereichen als auch zwischen den äußeren Bereichen der inneren Abschnitte der Finnen ausgebildet sein. In der Regel weisen die inneren Abschnitte der Finnen innerhalb des Strömungsraumes keine Verbindung miteinander auf. Erfindungsgemäß sind innere Enden der Finnen, insbesondere die inneren Bereiche der inneren Abschnitte der Finnen, freistehend, wobei die inneren Enden der Finnen, insbesondere die inneren Bereiche der inneren Abschnitte der Finnen, typischerweise nicht über eine Hülse oder ein anderes Bauteil miteinander verbunden sind. Der Strömungsraum, der im Betrieb in der Regel von dem Medium durchströmt wird, wird typischerweise in einem äußeren Bereich durch die Statornuten gebildet und erfindungsgemäß in einem inneren Bereich durch den gegebenenfalls rotierenden Rotor, insbesondere nicht durch feststehende Hülsen oder ähnliche Bauteile, begrenzt, insbesondere im axialen Bereich der Finnen und/oder des Rotormagneten.

Es kann vorgesehen sein, dass die Spulen und die äußeren Abschnitte der Finnen jenseits einer radialen Abdichtung des Strömungsraumes angeordnet sind. Somit können die Spulen außerhalb des Strömungsraumes angeordnet sein, wodurch sowohl der Magnetfluss als auch die Strömungseigenschaften optimiert werden können. Es ist in der Regel vorgesehen, dass die Finnen, insbesondere sowohl deren äußere Abschnitte als auch deren innere Abschnitte, einen Aktivteil des magnetischen Kreises bilden. Auf diese Weise können die Finnen eingerichtet sein, den Magnetfluss zu optimieren. In der Regel weisen die äußeren Abschnitte und/oder die inneren Abschnitte der Finnen einen rechteckigen Querschnitt auf. Hierdurch können deutliche Vorteile in der Montage erreicht werden, insbesondere im Zusammenhang mit der unten beschriebenen Strömungskappe. Ferner weist der Rotor erfindungsgemäß einen Rotormagneten auf. Die Finnen weisen hierbei erfindungsgemäß einen axialen Überlapp mit dem Rotormagneten auf. In Bezug auf die Strömungsrichtung sind die Finnen somit in der Regel nicht lediglich hinter oder vor dem Rotormagneten sondern zumindest auch auf axialer Höhe des Rotormagneten angeordnet. Es kann auch vorgesehen sein, dass die Finnen einen axialen Überstand mit dem Rotormagneten aufweisen. Auf diese Weise kann die Optimierung des Magnetflusses durch die Finnen in vorteilhafter Weise gewährleistet werden. Typischerweise sind die Finnen in axialer Richtung mindestens so lang wie der Rotormagnet. Insbesondere kann es vorgesehen sein, dass die Finnen über die gesamte axiale Erstreckung des Rotormagneten ausgedehnt sind. In anderen Ausführungen kann es jedoch auch vorgesehen sein, dass die Länge des Rotormagneten eine Gesamtlänge der Finnen in axialer Richtung übertrifft, sodass ein Unterstand vorliegt.

Ein größter Durchmesser des im Betrieb in der Regel von dem Medium durchströmten Strömungsraums, insbesondere gemessen an einer Außenseite der Statornuten oder einer Innenseite der radialen Abdichtung bzw. der gegebenenfalls vorhandenen Deckplatten, beträgt erfindungsgemäß mindestens einem Zweifachen, insbesondere mindestens einem Dreifachen und/oder höchstens einem Zehnfachen, insbesondere höchstens einem Acht- oder Fünffachen, des Außendurchmesser des Rotors.

Hierbei ergibt sich, dass die Spulen und/oder die äußeren Abschnitte der Finnen in der Regel außerhalb des Strömungsraums, d.h. an einer radialen Position angeordnet sind, bis zu der sich der der Strömungsraum in seiner radialen Ausdehnung nicht mehr erstreckt. Somit sind die Spulen und/oder die äußeren Abschnitte der Finnen in diesem Fall jenseits einer radialen Abdichtung des Strömungsraumes angeordnet. Auf diese Weise können bei vergleichsweise großer Mediendurchflussöffnung, die durch einen nicht blockierten, d.h. insbesondere durch die Finnen belegten, Teil des Strömungsraums gebildet wird, ein optimierter Magnetfluss und eine optimierte Entwärmung gewährleistet werden. Das Magnetfeld kann hierbei von jeder der Spulen, die außerhalb der radialen Erstreckung des Strömungsraumes angeordnet sind, über den äußeren Abschnitt einer zugehörigen Finne in radialer Richtung durch den Strömungsraum und an den Rotor herangeführt werden. Hierdurch wird ferner ein vereinfachter Auf- und Zusammenbau des Medienspaltmotors bzw. Turboladers ermöglicht, wie untenstehend näher ausgeführt wird.

Die Finnen können gleichmäßig bzw. regelmäßig über einen Umfang verteilt angeordnet sein. In der Regel sind im Strömungsraum zwischen den Finnen Statornuten ausgebildet, durch die zumindest ein Teil des Mediums strömt. In typischen Ausführungen weist der Medienspaltmotor, der ein 3-phasiger, 2-poliger Medienspaltmotor sein kann, insbesondere für Turbolader, eine Anzahl von Finnen auf, die 3 oder einem Vielfachen von 3 entspricht. Zur optimierten Magnetfeldführung weist der Medienspaltmotor beispielsweise 3, 6, 12 oder 24 Finnen entlang der Umfangsrichtung auf. Der Medienspaltmotor kann in einigen Ausführungen zur Optimierung der Größe der Mediendurchführungsöffnung höchstens 24 Finnen entlang der Umfangsrichtung aufweisen.

In einigen Ausführungen ist es vorgesehen, dass die Spulen auf Spulenträgern aufgenommen sind. Ferner können die Spulen gemeinsam mit den Spulenträgern, insbesondere von außen, auf die äußeren Abschnitte der Finnen aufgeschoben bzw. aufgesteckt sein. Dadurch wird ein schneller und einfacher Zusammenbau des Medienspaltmotors ermöglicht, ohne dass Nachteile im Magnetfluss oder in der Entwärmung erzeugt werden. Hierfür ist es nicht zwingend notwendig, dass die Finnen innere Abschnitte aufweisen. Beispielsweise können zur besonderen Vereinfachung bei der Herstellung die Spulen mit den Spulenträgern vorgefertigt sein, was in einer Vielzahl von bekannten Anordnungen nicht möglich oder zumindest nicht vorgesehen war.

In typischen Ausführungen sind die äußeren Abschnitte der Finnen einstückig mit den inneren Abschnitten ausgebildet, insbesondere in dem Sinne, dass ein monolithischer Teil der Finnen durchgehend ist von dem äußeren Abschnitt der Finnen zum inneren Abschnitt. Auf diese Weise kann der Magnetfluss durch die Finnen und somit der Magnetfluss vom Stator zum Rotor verbessert und eine Effizienz des Medienspaltmotors gesteigert werden.

In typischen Ausführungen weist der Medienspaltmotor einen Jochring auf. An dem Jochring können die äußeren Abschnitte der Finnen befestigt sein. Insbesondere können die äußeren Abschnitte an einer Innenseite des Jochrings befestigt sein und/oder von dem Jochring nach innen vorstehen. Hierfür ist es nicht zwingend notwendig, dass die Finnen innere Abschnitte aufweisen. Der Jochring kann der Rückführung des Magnetfeldes dienen, dem Elektromotor der Verdichteranordnung strukturellen Halt geben und zu einer Stabilität und Haltbarkeit des Medienspaltmotors beitragen.

Es kann beispielsweise vorgesehen sein, dass die äußeren Abschnitte der Finnen mit dem Jochring bzw. mit Abschnitten des Jochrings verklebt oder verschweißt sind oder mit diesem bzw. diesen einstückig, d.h. monolithisch, ausgebildet sind. Hierbei führt eine einstückige Ausführung zu einer besonders robusten Ausführung mit optimiertem Magnetfluss. In anderen besonders bevorzugten Ausführungen sind die äußeren Abschnitte der Finnen jedoch über eine Steckverbindung mit dem Jochring verbunden. Hierfür kann an dem äußeren Abschnitt der Finnen ein Steckverbinderelement, das insbesondere einstückig mit dem Rest des äußeren Abschnitts ausgebildet sein kann, vorgesehen sein. Der Jochring kann entsprechend komplementär ausgebildete Steckverbinderelemente aufweisen. Hierbei bietet es sich zum schnellen Zusammenbau des Medienspaltmotors bei optimiertem Magnetfluss und optimierter Entwärmung an, dass die äußeren Abschnitte der Finnen über eine Schwalbenschwanzverbindung mit dem Jochring verbunden sind.

In einigen bevorzugten Ausführungen sind verschiedene Abschnitte des Jochrings, die mit unterschiedlichen Finnen verbunden sind, über Gelenkverbindungen miteinander verbunden. Die Gelenkverbindungen können beispielsweise durch Scharniere realisiert sein oder beispielsweise dadurch, dass die Abschnitte des Jochrings mit ihren außenliegenden Flächen nebeneinander auf einer verformbaren Folie, beispielsweise einer Klebefolie, befestigt, beispielsweise geklebt sind. Somit lässt sich der vorgeschlagene Medienspaltmotor auf besonders einfache Weise zusammenbauen, wobei gleichzeitig ein mechanisch robuster Aufbau erreicht wird. Eine Drehachse dieser Gelenkverbindungen ist hierbei in der Regel parallel zu einer Drehachse des Rotors orientiert. Auf diese Weise kann sich somit eine Polkette ergeben. Es kann hierbei insbesondere vorgesehen sein, dass einzelne Abschnitte des Jochrings einstückig mit einer zugeordneten Finne ausgebildet sind, sodass der Medienspaltmotor bei optimiertem Magnetfluss strukturell einfach aufgebaut und gleichzeitig schnell und präzise zusammensetzbar ist. Die Gelenkverbindungen sind in der Regel an außenliegenden Kanten der Abschnitte des Jochrings vorgesehen.

Es kann in bevorzugten Ausführungen vorgesehen sein, dass der Medienspaltmotor Deckplatten aufweist. Die Deckplatten können zwischen den äu-βeren und den inneren Abschnitten oder an einem innenliegenden Ende der äußeren Abschnitte jeweils benachbarter Finnen angeordnet sein. Zudem können die Deckplatten einen Bereich des Strömungsraums begrenzen. Insbesondere kann durch die Deckplatten eine Abdichtung in radialer Richtung erreicht werden. Die Deckplatten und die Finnen können den Strömungsraum in Umfangsrichtung vollständig umlaufen. Es kann vorgesehen sein, dass die Deckplatten zwischen den Spulen des Stators und dem Strömungsraum angeordnet sind.

Die Deckplatten können beispielsweise als Deckschieber ausgeführt sein. Es kann vorgesehen sein, dass die benachbarten Finnen, insbesondere zwischen dem inneren Abschnitt und dem äußeren Abschnitt, sich insbesondere axial, d.h. in einer Richtung parallel zur Rotorachse, erstreckende Nuten aufweisen, in die die Deckplatten eingeschoben sind. Auf diese Weise können die Deckplatten zum einfachen und mechanisch stabilen Zusammenbau zwischen den benachbarten Finnen eingeschoben werden, insbesondere in der Richtung parallel zur Rotorachse.

Es ist in einigen Ausführungen jedoch auch vorteilhafterweise vorgesehen, dass die Deckplatten einstückig mit den Finnen ausgebildet sind. Beispielsweise können die Deckplatten und die Finnen einen einstückigen bzw. monolithischen Finnenring ausbilden. Typischerweise umläuft der Finnenring der Strömungsraum in Umfangsrichtung vollständig. Somit ist der Medienspaltmotor konstruktiv einfach und besonders stabil ausgeführt. Insbesondere wenn die äußeren Abschnitte der Finnen anschließend mit dem Jochring verbunden werden, kann ein einfacher Zusammenbau des Medienspaltmotors gewährleistet werden.

Es kann für eine verbesserte Robustheit, einen verbesserten Magnetfluss, eine vergrößerte Mediendurchflussöffnung und eine verbesserte Entwärmung zudem vorgesehen sein, dass die äußeren Abschnitte der Finnen eine größere Breite aufweisen als die inneren Abschnitte der Finnen. Die Breite bezieht sich hierbei auf eine Ausdehnung in Umfangsrichtung. Beispielsweise können die Finnen in radialer Richtung, insbesondere im Bereich zwischen innerem und äußerem Abschnitt und insbesondere sprunghaft, verbreitert sein. Zur besseren Zusammenbaubarkeit und insbesondere Aufsteck- bzw. Aufschiebbarkeit der Spulen sind die äußeren Abschnitte der Finnen im Bereich, der von der Spule umlaufen wird, zudem von konstanter Breite, insbesondere der größeren Breite, ausgeführt.

Es kann außerdem vorgesehen sein, dass die die Spulen durch eine entlang einer Kreislinie gekrümmte Wicklung gebildet werden und/oder dass die Spulenträger entlang einer Kreislinie gekrümmt sind. Die Krümmung folgt hierbei in der Regel einer Krümmung der Abdichtung des Strömungsraumes, insbesondere einer Krümmung der Deckplatten. Auf diese Weise kann eine Kompakte Ausführung bei verbesserter Magnetfeldeinleitung erreicht werden.

Es kann zudem vorgesehen sein, dass sich lediglich einige der Finnen mit ihren inneren Abschnitten nicht bis zum Rotor erstrecken.

In weiteren Ausführungen weist der Medienspaltmotor eine Strömungskappe auf. Durch die Strömungskappe können die Strömungseigenschaften des Medienspaltmotors optimiert werden. Die Strömungskappe kann als separates Bauteil ausgeführt sein. Es kann sein, dass die Strömungskappe vor und/oder hinter den Finnen an weiteren Bestandteilen des Medienspaltmotors befestigbar, beispielsweise aufschraubbar ist. Die Strömungskappe kann auch in axialer Richtung, insbesondere dünnwandig, weitergeführt sein, um die Finnen, insbesondere Statorbleche der Finnen, teilweise oder vollständig zu umschließen. Die Strömungskappe kann zum Beispiel Seitenflächen und/oder ein radial innenliegendes Ende der Finnen umschließen. In typischen Ausführungen ist die Strömungskappe einstückig ausgebildet. Die Strömungskappe kann aus einem magnetisch nicht aktiven Material gefertigt sein. Zum Beispiel kann die Strömungskappe ein Kunststoffteil sein. Beispielsweise kann die Strömungskappe ein vorgefertigtes Teil, insbesondere ein vorgefertigtes Spritzgussteil, sein. Die Strömungskappe kann zur aerodynamischen Verbesserung des Medienspaltmotors dienen, ohne dass die magnetischen Eigenschaften durch die Strömungskappe nennenswert beeinflusst werden.

Die Strömungskappe kann in Bezug auf eine Strömungsrichtung vor dem Rotor und insbesondere vor den Finnen angeordnet sein. In dieser Ausführung kann die Strömungskappe als Anströmkappe bezeichnet werden. Zudem kann die Strömungskappe einen Anströmdom aufweisen. Der Anströmdom kann den Rotor überdecken. Zusätzlich oder alternativ kann die Strömungskappe Anströmkanten aufweisen. Die Anströmkanten können vor den Finnen angeordnet sein und/oder diese zumindest teilweise oder vollständig überdecken. Die Anströmkanten können durch eine Verjüngung in einer der Strömungsrichtung entgegengesetzten Richtung gebildet werden. Es kann vorgesehen sein, dass die Anströmkanten eine entgegengesetzte Tropfenform der Strömungskappe und/oder der Strömungskappe in Verbindung mit den Finnen verursacht. Die entgegengesetzte Tropfenform ist im Gegensatz zu einer Tropfenform so zu verstehen, dass der beschriebene Gegenstand an seiner angeströmten Seite schmaler ist (wohingegen ein Tropfen bekanntlich an seiner nicht angeströmten Seite schmaler ist).

Die Strömungskappe kann auch in Bezug auf eine Strömungsrichtung hinter den Finnen angeordnet sein. In dieser Ausführung kann die Strömungskappe als Abströmkappe bezeichnet werden. Die Abströmkappe kann Abströmkanten aufweisen. Die Abströmkanten können hinter den Finnen angeordnet sein und/oder diese zumindest teilweise oder vollständig überdecken. Die Abströmkanten können durch eine Verjüngung in Strömungsrichtung gebildet werden. Es kann vorgesehen sein, dass der Medienspaltmotor sowohl eine Anströmkappe als auch eine Abströmkappe aufweist. Hierbei kann sowohl die Anströmkappe als auch die Abströmkappe die für die Strömungskappe im Allgemeinen beschriebenen Eigenschaften aufweisen.

Die Finnen und/oder der Jochring weisen typischerweise, insbesondere anisotrope, magnetisch leitfähige Eigenschaften auf. Die Finnen und/oder der Jochring sind typischerweise aus Elektroblechen, geblechten Elektrostählen oder Statorblechen gefertigt. Die Finnen können als Statorblechpaket mit Einzelblechen ausgebildet sein. Ferner können die Finnen und der gegebenenfalls vorhandene Jochring als einstückiges (d.h. bezüglich der Einzelbleche durchgängiges) Statorblechpaket ausgebildet sein. Eine Länge der Finnen entspricht in der Regel mindestens einer Gesamtlänge des Rotormagneten. Die Finnen können der Fokussierung der Magnetflusslinie vom Stator hin zum Rotormagnet dienen und die Streuverluste verringern. Durch sie können somit die elektrischen Eigenschaften des Medienspaltmotors verbessert werden. Die Flusslinien führen in der Regel von den Finnen durch den Luftspalt direkt in den Rotormagnet.

Des Weiteren kann es vorgesehen sein, dass die Finnen und insbesondere deren innere Abschnitte gekröpft sind. Hierbei können die gegebenenfalls vorhandenen Statorbleche der Finnen gekröpft sein. Hierdurch kann die Auskragung des Magnetrotors verringert und/der Bauraum für den Wickelkopf vergrößert und damit beispielsweise eine Erhöhung eines Kupferfüllfaktors realisiert werden. Typischerweise verlaufen die Finnen bzw. deren Statorbleche angeschrägt, insbesondere derart, dass radial innenliegende Enden der Finnen weiter in Strömungsrichtung liegen. In besonders bevorzugter Ausführung sind die inneren Abschnitte der Finnen so angeschrägt, dass radial innenliegende Enden stromaufwärtsliegender Seiten der inneren Abschnitte weiter in Strömungsrichtung liegen als radial außenliegende Enden der stromaufwärtsliegenden Seiten der inneren Abschnitte. Es kann auch vorgesehen sein, dass die äußeren Abschnitte der Finnen nicht angeschrägt sind. Hierdurch kann einerseits eine Optimierung und Verbesserung der Rotordynamik erreicht und andererseits gewährleistet werden, dass die magnetischen Eigenschaften und die Montagefähigkeit nicht beeinträchtigt werden.

In einigen Ausführungen ist vorgesehen, dass die Strömungskappe angewinkelte Abströmkanten aufweist, die in Bezug auf eine Strömungsrichtung hinter den Finnen angeordnet sind, zur Erzeugung eines Vordralls in dem Medium bzw. in einem Ansaugmedium. Hierdurch kann die Strömungskappe zur weiteren Verbesserung des Medienspaltmotors beitragen, indem durch eine Schrägstellung der Abströmkanten ein Vordrall erzeugt wird, der sich vorteilhaft auf die Verdichterkennlinien auswirkt.

In typischen Ausführungen weist der Medienspaltmotor zudem eine Leistungselektronik auf. Die Leistungselektronik ist in der Regel eine 3-phasige Leistungselektronik. Die Leistungselektronik kann zur Ansteuerung der Motorphasen eingerichtet sein. Typischerweise ist die Leistungselektronik eingerichtet, die Lage des Magnetrotors zu bestimmen, insbesondere zu jedem Zeitpunkt. Es kann zudem vorgesehen sein, dass die Leistungselektronik eingerichtet ist, eine feldorientierte Regelung, insbesondere Vektorregelung, durchzuführen. Die Ermittlung der Rotorlage erfolgt vorzugsweise sensorlos, insbesondere geberlos, d.h. anhand der induzierten Motorspannung (EMK). Eine Kommutierung des Stromflusses wird vorzugsweise sinusförmig realisiert. Hierdurch kann die Drehmomentwelligkeit möglichst gering gehalten werden. Die sensorlose Regelung erfolgt bevorzugt mit Hilfe einer kontinuierlichen Strommessung. Zu diesem Zweck kann es vorgesehen sein, dass die Leistungselektronik Stromsensoren aufweist. Die Leistungselektronik kann einen Gleichspannungszwischenkreis aufweisen. Ferner kann die Leistungselektronik einen Leistungsteil (Endstufe) aufweisen. Darüber hinaus weist die Leistungselektronik typischerweise eine Regelektronik, insbesondere mit einem Microcontroller, auf. Die Leistungselektronik kann bei Turboladeranwendungen sowohl für motorischen als auch für generatorischen Betrieb des Medienspaltmotors ausgelegt sein. Das System kann somit sowohl zum Boosten als auch zum Rekuperieren ausgelegt sein.

Ein Betriebsbereich der sensorlosen Regelung (aktiver Modus) kann bei einer minimalen Drehzahl beginnen, abhängig von der Höhe der induzierten Spannung. Diese Minimaldrehzahl kann bei Turboladeranwendungen durch den Abgasmassenstrom beim Leerlauf des Verbrennungsmotors erreicht werden. Bei anderen Anwendungen wird der Motor gesteuert bis zur minimalen Regeldrehzahl hochgefahren. Um das System motorisch oder generatorisch zu betreiben, muss sich der Medienspaltmotor in der Regel im aktiven Modus, d.h. in der (sensorlosen) Regelung befinden. Die maximale Regeldrehzahl kann limitiert sein aufgrund der Taktfrequenz der Regelung, d.h. abhängig von der Regelelektronik, der Qualität des Microcontrollers und der Software. Wird die maximale Regeldrehzahl z.B. bei Turboladeranwendungen durch den Abgasmassenstrom des Verbrennungsmotors überschritten, geht der Regler vorzugsweise in den sogenannten Passivmodus. Hierbei sind die Leistungsschalter in der Regel dauerhaft geöffnet und der Motor befindet sich im Leerlauf. Bei sinkender Drehzahl wird der Medienspaltmotor bevorzugt erneut in den aktiven Modus geschaltet. Es kann vorgesehen sein, dass dazu mit Hilfe von Spannungssensoren die notwendige Rotorlage ermittelt und die Regelung wieder aufgenommen wird. In diesem Zusammenhang wird auch von Wiedereinfangen bzw. von Aufspringen auf Drehzahl gesprochen.

Während der Regelung kennt das System in der Regel zu jedem Zeitpunkt die genaue Drehzahl des Turboladers, wodurch die exakte Regelung der Aufladung ermöglicht wird. Diese Information kann darüberhinaus zur Fahrzeugdiagnose (On-Board Diagnostics, OBD) und u.a. zur Ermittlung der Pumpgrenze des Turboladers verwendet werden.

Die vorliegende Anmeldung betrifft auch ein Verfahren zur Herstellung des Medienspaltmotors, wobei oben oder unten in Bezug auf den Medienspaltmotor beschriebene Merkmale entsprechend für das Verfahren gelten.

Ausführungsbeispiele werden nachfolgend anhand der Abbildungen beschrieben. Es zeigen
- Fig. 1: eine Ansicht eines Turboladers,
- Fign. 2(a) und (b): schematische Ansichten eines Stators des Turboladers,
- Fig. 3: eine perspektivische Ansicht einer Spule und eines Spulenkörpers,
- Fign. 4(a) bis (c): schematische Ansichten des Stators des Turboladers gemäß einer weiteren Ausführung,
- Fign. 5(a) bis (c): schematische Ansichten des Stators des Turboladers gemäß einer weiteren Ausführung,
- Fig. 6: eine schematische Ansicht des Stators des Turboladers gemäß einer weiteren Ausführung,
- Fign. 7(a) und (b): schematische Ansichten von Strömungskappen,
- Fign. 8(a) und (b): perspektivische Ansichten des Stators mit Strömungskappen,
- Fig. 9: eine schematische Ansicht des Stators gemäß Fig. 8(a),
- Fign. 10(a) und (b): Ansichten von Medienspaltmotoren im Querschnitt,
- Fign. 11(a) und (b): perspektivische Ansichten einer Anströmkappe,
- Fign. 12(a) und (b): perspektivische Ansichten einer Abströmkappe,
- Fign. 13(a) und (b): Schnittansichten der An- und Abströmkappe und
- Fig. 14: Statorbleche mit gekröpften Finnen.

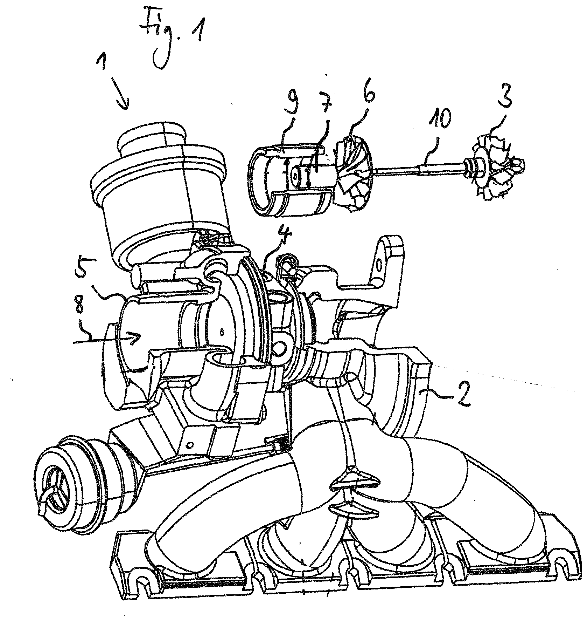

Figur 1 zeigt in einer Teilexplosionszeichnung einen elektrisch modifizierten mechanischen Turbolader 1, der mit einem Turbinengehäuse 2 an einen Verbrennungskraftmotor ankoppelbar ist. Im Allgemeinen kann sich die beschriebene Erfindung jedoch auch auf andere Medienspaltmotoren beziehen, beispielsweise mit Spiralförderern. Durch den in der Abbildung gezeigten Abgaskrümmer wird nach der Verbrennung das Abgas gesammelt und zum Antrieb eines Turbinenrades 3 genutzt. Das Turbinenrad 3 ist vom Turbinengehäuse 2 umgeben und ist im Wesentlichen einem herkömmlichen mechanischen Turbolader entnommen. An das Turbinengehäuse 2 schließt sich ein Lagergehäuse 4 und sodann ein Verdichtergehäuse 5 an. In diesem Verdichtergehäuse 5 ist ein Verdichterrad 6 angeordnet, das durch eine Einlassöffnung zugeführte Luft verdichtet. Die Luft wird anschließend zu dem Brennraum des Verbrennungskraftmotors geführt. Das Verdichterrad 6 zeigt in dem dargestellten Beispiel linksseitig einen Fortsatz, an dem ein Rotor 7 eines Elektromotors angeordnet ist. Der Rotor 7 ist hierbei frei auskragend ausgeführt, d.h., der Rotor 7 ist nicht gesondert gelagert. Der Rotor 7 ist bei fertig montiertem Turbolader 1 zentral in der Einlassluftöffnung angebracht. Die Lufteinlassströmungsrichtung ist in der Abbildung mit einem Pfeil mit Bezugszeichen 8 gekennzeichnet.

Um den Rotor 7 herum ist ein Stator 9 vorgesehen, der in der Abbildung lediglich schematisch dargestellt ist und im Wesentlichen eine hohlzylindrische Form aufweist. Vorliegend ist der Stator 9 als Einsatz in eine entsprechende Öffnung vorgesehen, so dass dieser sehr leicht montierbar ist. Ein zwischen Rotor 7 und Stator 9 ausgebildeter Rotorspalt bildet die Einlassluftöffnung für das Verdichterrad 6. Der Rotor 7 des Elektromotors weist einen Rotormagneten auf, der von einer Armierung umgeben ist.

Das Verdichterrad 6 kann (muss aber nicht) aus einem nichtmetallischen Material sein, bei einer Ausführung beispielsweise aus einem unverstärkten Kunststoff ist die Beeinflussung des elektromagnetischen Feldes des Elektromotors minimiert. Der Rotormagnet wiederum ist bereichsweise hohl zum Aufstecken auf eine gemeinsame Welle mit dem Verdichterrad 6 ausgeführt. Eine das Turbinenrad 3 mit dem Verdichterrad 6 verbindende Welle 10 ist in der vorliegenden Ausführungsform so ausgeführt, dass Turbinenrad 3, Verdichterrad 6 sowie Rotor 7 drehfest miteinander verbunden sind.

Die Sollspannung des Elektromotors beträgt beispielsweise 12 V, es sind allerdings auch andere Spannungen (beispielsweise 48 V bis 800 V für Hybridfahrzeuge) möglich. In dem dargestellten Beispiel ist der Rotormagnet des Rotors 7 so ausgebildet, dass er partiell oder auch komplett in das Verdichterrad 6 integriert ist oder mit diesem verbunden ist. Ein kleinster Innendurchmesser des Stators 9 kann 1,5 bis 8-mal so groß sein wie ein größter Außendurchmesser des Rotors 7. Der Elektromotor ist sowohl im Motorbetrieb (zur Beschleunigung und Vermeidung eines Turbolochs) als auch im Generatorbetrieb (zur Rückgewinnung von Energie) betreibbar. Erreicht der Ladedruck (im Turbinengehäuse 2) einen bestimmten Sollwert, wird unter Verwendung eines rückspeisefähigen Umrichters zusätzliche elektrische Energie erzeugt. Der Elektromotor des Turboladers 1 ist hierbei mit einem Speicher für elektrische Energie verbunden zur Entnahme elektrischer Energie in einem Motorbetrieb des Turboladers 1 und zur Einspeisung elektrischer Energie bei einem Generatorbetrieb des Turboladers 1. Zur effizienten Steuerung des Antriebssystems bzw. des Turboladers 1 ist eine Steuerelektronik zur Ermittlung der Drehzahl von Turbinenrad 3 oder Verdichterrad 6, Ist-Werten von turbinengehäuseseitigen und verdichtergehäuseseitigen Druckverhältnissen sowie weiteren für den Verbrennungskraftmotor drehmomentrelevanten Werten vorgesehen.

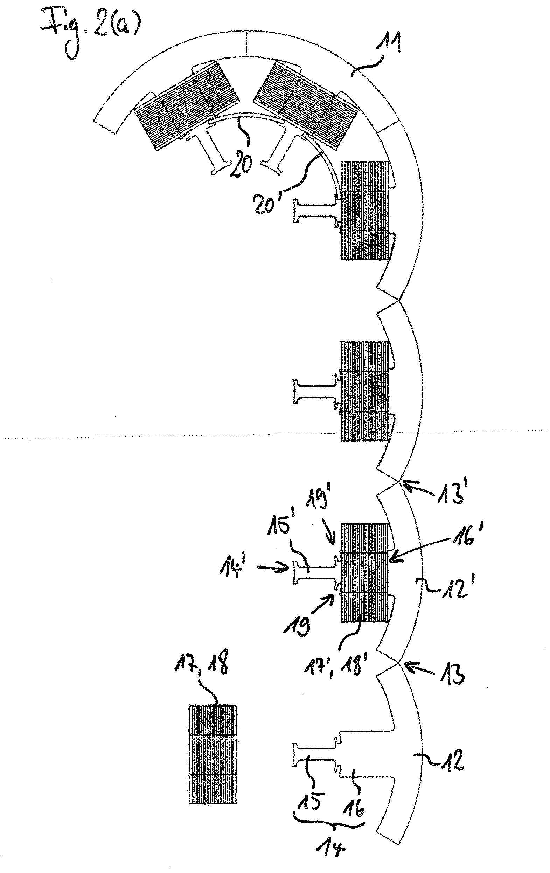

Figur 2(a) zeigt eine schematische Ansicht des herzustellenden Stators 9 des Turboladers mit Blickrichtung quer zur Rotorachse. Wiederkehrende Merkmale sind in dieser und den nachfolgenden Abbildungen mit den gleichen Bezugszeichen versehen. Der Stator 9 umfasst einen Jochring 11, der der gezeigten Abbildung als Polkette ausgeführt ist, die sechs Abschnitte aufweist. Von den Abschnitten des Jochrings 11 sind zwei beispielhaft mit den Bezugszeichen 12 und 12' gekennzeichnet. Sämtliche Abschnitte 12, 12' des Jochrings 11 sind über Gelenkverbindungen, beispielhaft gekennzeichnet mit Bezugszeichen 13 und 13', miteinander verbunden.

Die Abschnitte 12, 12' des Jochrings 11 sind jeweils mit einer Finne 14, 14' einstückig, d.h. monolithisch, zusammenhängend ausgebildet. Die Finnen 14, 14' weisen jeweils einen dünneren inneren Abschnitt 15, 15' sowie einen verbreiterten äußeren Abschnitt 16, 16' auf. Bei einer Herstellung des Turboladers 1 werden Spulen 17, 17' des Stators 9, die auf Spulenträgern 18, 18' aufgenommen sind, auf die äußeren Abschnitte 16, 16' der Finnen 14, 14' aufgeschoben oder aufgesteckt.

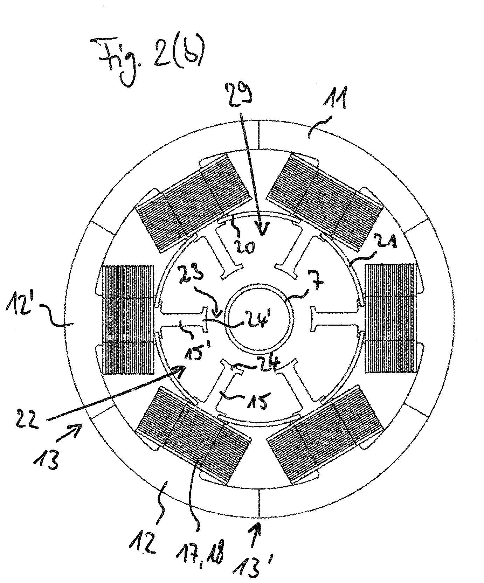

Zwischen den äußeren Abschnitten 16 und den inneren Abschnitten 15 weisen die Finnen 14 beidseitig axial verlaufende Nuten 19, 19' auf. Bei der Herstellung des Turboladers werden Deckplatten 20, 20' in die Nuten 19, 19' benachbarter Finnen in axialer Richtung eingeschoben. Die Deckplatten 20, 20' dichten anschließend (gemeinsam mit den Finnen 14) einen Strömungsraum 29 des Turboladers 1 in radialer Richtung ab, wie Fig. 2(b) illustriert. In der dargestellten Konfiguration ist der Turbolader 1 unter Einklappen der Gelenkverbindungen 13, 13' derart zusammengebaut, dass die Abschnitte 12, 12' des Jochrings 11 einen geschlossen Ring ausbilden. Die inneren Abschnitte 15, 15' der Finnen 14, 14' erstrecken sich nach dem Zusammenbau in radialer Richtung nach Innen in Richtung des Rotors 7. Die Finnen 14, 14' sind zudem gleichmäßig über den Umfang verteilt angeordnet. Der Strömungsraum 29 umfasst zur Medienförderung durch den Turbolader 1 Statornuten 22, die durch Zwischenräume zwischen den inneren Abschnitten 15, 15' der Finnen 14, 14' begrenzt sind, sowie einen den Rotor 7 vollständig umlaufenden Medienspalt 23, der sich in einem radialen Bereich zwischen dem Rotor 7 und inneren Enden der Finnen 14, 14' erstreckt. Ein Innendurchmesser der Finnen 14, 14' kann, wenn man den größtmöglichen auf der Rotorsachse zentrierten Kreisdurchmesser zugrunde legt, beispielsweise höchstens 50 mm, insbesondere höchstens 37,5 mm, und/oder zumindest 15, beispielsweise 26 mm, betragen. Ein Außendurchmesser des Rotors kann an derselben axialen Position, wenn man einen kleinstmöglichen Kreisdurchmesser zugrunde legt, beispielsweise höchstens 25 mm und/oder zumindest 10 mm, beispielsweise 17 mm, betragen. Die Finnen 14, 14' weisen an ihren inneren Enden zudem Verbreiterungen 24, 24' zur Reduzierung des magnetischen Rastmoments auf.

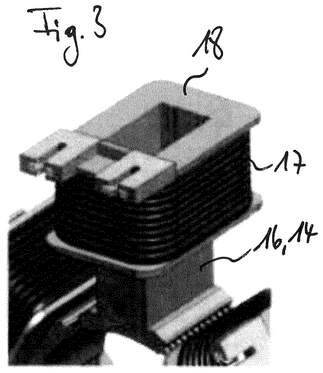

Figur 3 illustriert in einer beispielhaften, perspektivischen Darstellung, wie die Spule 17 auf dem Spulenkörper 18 aufgenommen ist. Die Spule 17 ist hierbei um den Spulenkörper 18 gewickelt und gemeinsam mit dem Spulenkörper 18 vorgefertigt. In dem dargestellten Beispiel wird die Spule 17 gemeinsam mit dem Spulenkörper 18 von außen auf den äußeren Abschnitt 16 der Finne 14 aufgeschoben, wobei der innere Abschnitt 15 der Finne 14 in dieser Figur nicht dargestellt ist.

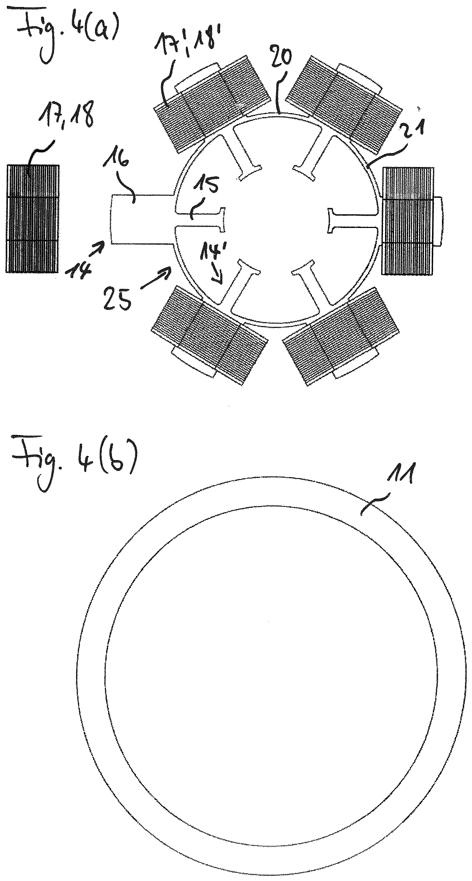

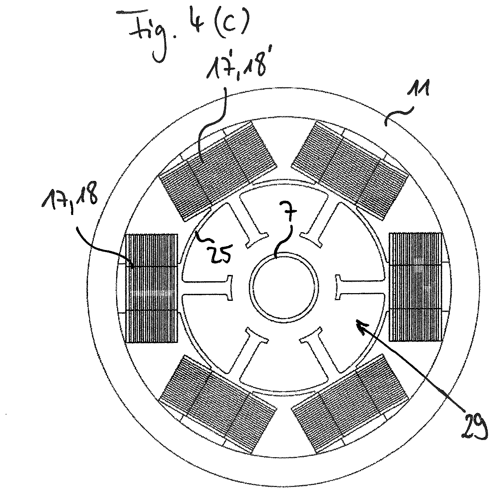

Figuren 4(a) bis (c) zeigen eine schematische Ansicht des Stators 9 des Turboladers 1 gemäß einer weiteren Ausführung. Diese Ausführung entspricht der oben beschriebenen, wobei jedoch die Deckplatten 20, 21 einstückig, d.h. monolithisch, mit den Finnen 14, 14' und somit mit deren inneren sowie äu-βeren Abschnitten 15, 16 ausgeführt sind. Die Finnen 14, 14' bilden in dieser Ausführung gemeinsam mit den Deckplatten 20, 21 einen einstückigen Finnenring 25 aus. Bei dem Zusammenbau des Turboladers 1 werden die Spulen 17 gemeinsam mit den Spulenträgern 18 von außen auf die äußeren Abschnitte 16 der Finnen 14 aufgeschoben. Anschließend wird der Finnenring 25 gemeinsam mit den Spulen 17 in einen in Fig. 4(b) dargestellten Jochring 11 eingeschoben und mit diesem verbunden, sodass sich die in Fig. 4(c) dargestellte Konfiguration ergibt.

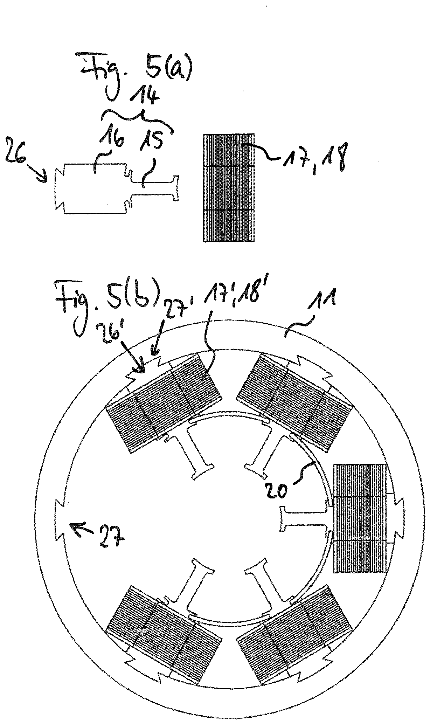

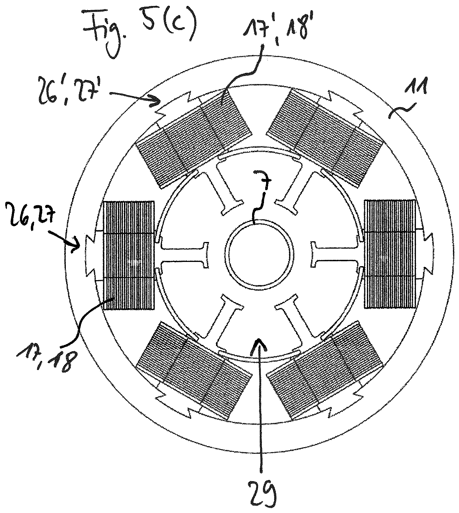

Figuren 5(a) bis (c) zeigen einen Stator 9 des Turboladers 1 gemäß einer weiteren Ausführung. Diese Ausführung entspricht den oben beschriebenen, wobei jedoch die Finnen 14 über eine Schwalbenschwanzverbindung an dem Jochring 11 befestigbar sind. Zu diesem Zweck weisen die Finnen 14 an ihren äußeren Abschnitten 16 schwalbenschwanzförmige Zapfen 26, 26' auf, die in entsprechend ausgeformte Nuten 27, 27' an einer Innenseite des Jochrings 11 einschiebbar sind.

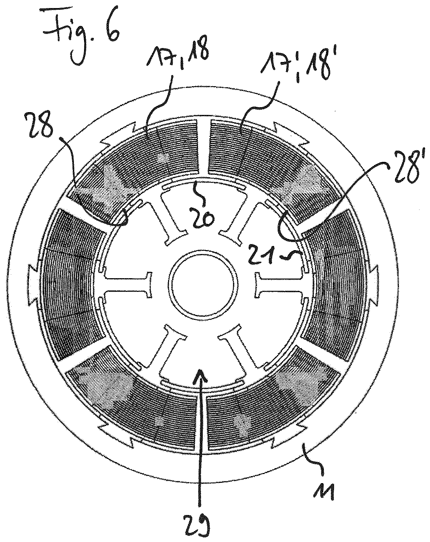

Eine weitere Ausführung des Stators 9 zeigt Fig. 6. Diese Ausführung kann in sämtlichen Merkmalen den oben beschriebenen Ausführungen entsprechen, wobei jedoch die Spulen 17, 17' und Spulenkörper 18, 18' derart gekrümmt sind, dass Innenseiten 28, 28' der Spulen bzw. Spulenkörper in ihrer Form einem Kreisabschnitt entsprechen. Diese Innenseiten 28, 28' folgen in ihrer Form den Deckplatten 20, 21, die den Strömungsraum 29 begrenzen. Auf diese Weise kann der zur Magnetfelderzeugung zur Verfügung stehende Platz optimal ausgenutzt werden.

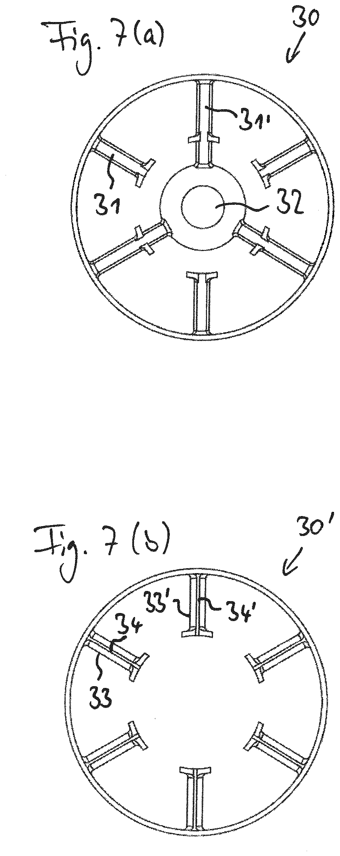

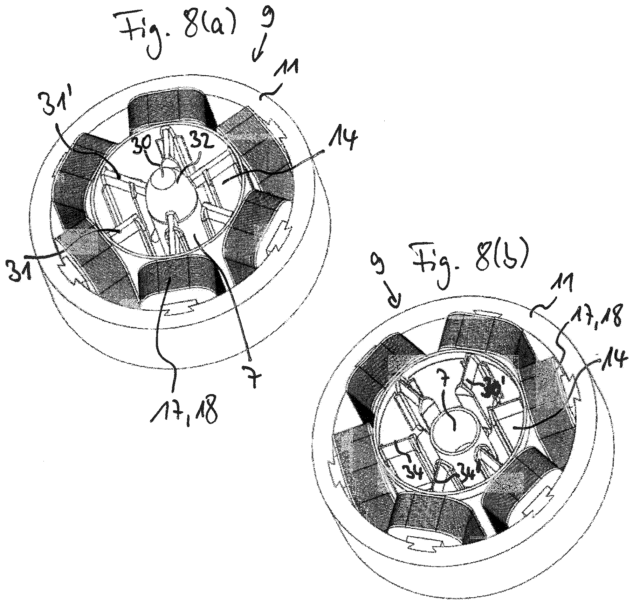

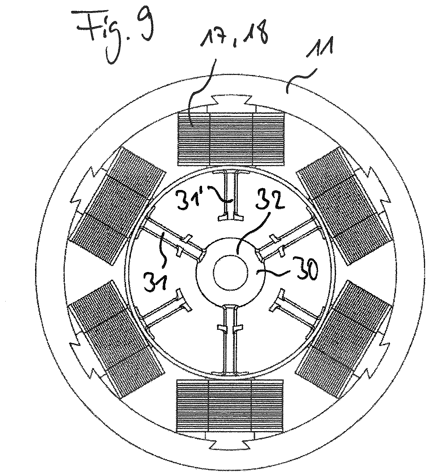

Figuren 7(a) und 7(b) zeigen Strömungskappen 30, 30' gemäß zwei unterschiedlichen Ausführungen. Figuren 8(a) und 8(b) zeigen entsprechende perspektivische Ansichten, bei denen der Stator 9 mit einer der Strömungskappen 30, 30' ausgestattet ist. Figur 9 zeigt eine Aufsicht auf den Stator 9 gemäß Fig. 8(a). Die Strömungskappen 30, 30' werden hierbei stromaufwärts vor den Finnen 14 des Stators 9 angeordnet und verbessern das Strömungsverhalten. Die Strömungskappe 30 der Fign. 7(a), 8(a) und 9 weist sechs über den Umfang verteilte Streben 31, 31' auf, die jeweils eine der Finnen 14 in axialer Richtung überdecken. Drei der Streben 31, 31' halten einen in axial mittiger Position angeordnete Anströmdom 32, der sich in Stromaufwärtsrichtung verjüngt und der den Rotor 7 des Turboladers 1 überdeckt. Die Ausführung der Strömungskappe 30' der Fign. 7(b) und 8(b) umfasst ebenfalls Streben 33, 33', die sich nach innen erstrecken. Diese Streben 33, 33' weisen an ihrem stromaufwärtsgelegenen Ende ausgeprägte Anström- bzw. Abrisskanten 34, 34' auf.

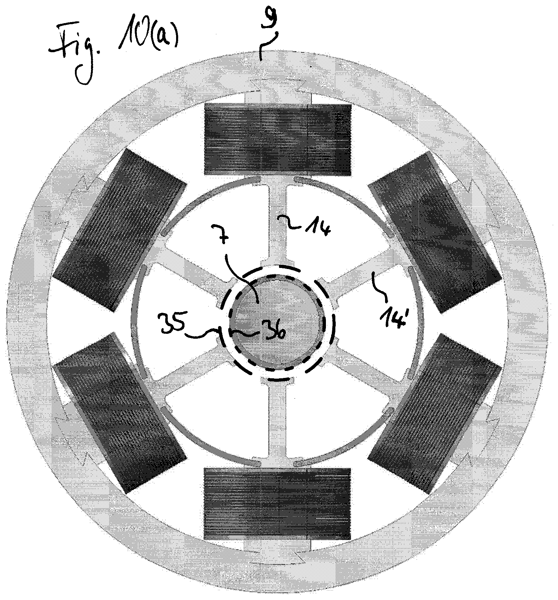

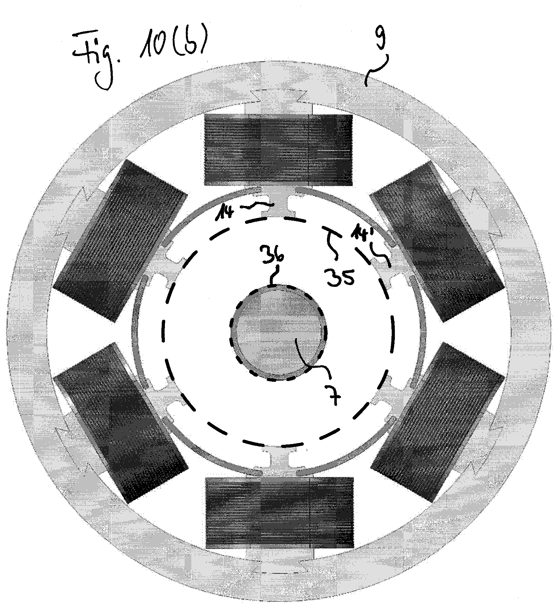

Zur Verdeutlichung möglicher Finnen-Geometrien zeigen die Fign. 10(a) und 10(b) Medienspaltmotoren mit unterschiedlichen Finnenlängen im Querschnitt. Fig. 10(a) zeigt einen Stator 9 mit einem min. Finneninnendurchmesser von 20,5 mm, bei einem Rotormagnetdurchmesser von 15 mm, wobei eine 2 mm dicke Armierung des Rotors 7 vorgesehen ist. Fig. 10(b) zeigt hingegen einen Stator 9 mit einem inneren Finnendurchmesser von 45 mm, wobei der Rotormagnetdurchmesser erneut 15 mm und die Dicke der Armierung des Rotors 7 erneut 2 mm beträgt. In den Fign. 10(a) und (b) ist der Innendurchmesser der Finnen 14, 14' mit durch die gestrichelte Linie mit Bezugszeichen 35 gekennzeichnet. Der Außendurchmesser des Rotors 7 ist hingegen durch eine gestrichelte Linie mit Bezugszeichen 36 gekennzeichnet. In den Fign. 10(a) und 10(b) ist, wie auch in der vorherigen Abbildungen zu erkennen, dass der Strömungsraum, der im Betrieb in der Regel von dem Medium durchströmt wird, typischerweise in einem äußeren Bereich durch die Statornuten gebildet und in einem inneren Bereich durch den gegebenenfalls rotierenden Rotor begrenzt wird. Der radial außenliegende Strömungsbereich der Statornuten und der radial innenliegende, ringförmige Strömungsbereich, der zwischen den Finnen und dem Rotor liegt, sind hierbei direkt miteinander verbunden beziehungsweise gehen direkt ineinander über.

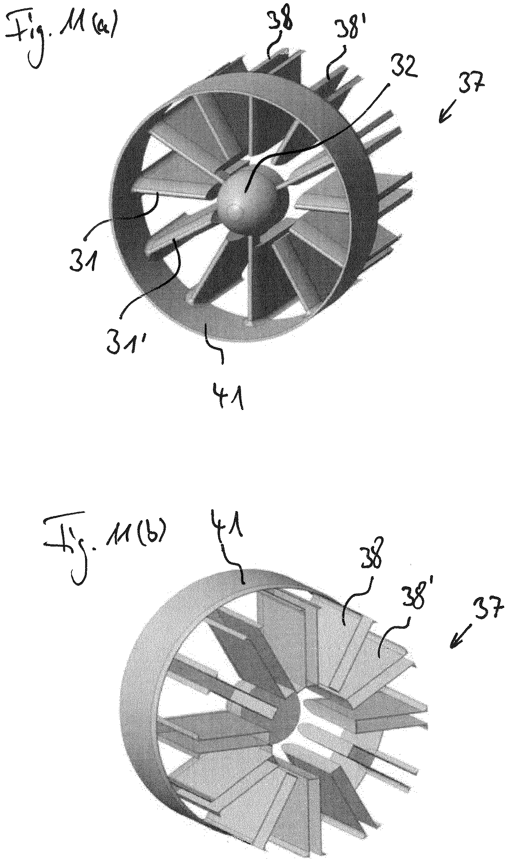

Figuren 11(a) und (b) zeigen eine Anströmkappe 37 in einer Vorderansicht (Betrachtung in Strömungsrichtung) und einer Rückansicht (Betrachtung entgegen der Strömungsrichtung). Die Anströmkappe 37 ist als einstückiges, magnetisch inaktives, Kunststoffteil vorgefertigt und kann in axialer Strömungsrichtung auf die Statorbleche der Finnen 14 aufgeschoben und befestigt werden. Die Anströmkappe 37 weist ein Ringelement 41 und die Anströmkanten 31, 31' auf, die sich von dem Ringelement nach innen erstrecken und die Finnen 14 überdecken. Zudem weist die Anströmkappe 37 den Anströmdom 32 auf, der den Rotor 7 überdeckt. Der Anströmdom 32 wird von einem Teil der Anströmkanten 31, 31' gehalten. Die Anströmkappe 37 weist zudem dünnwandige, hülsenartige Fortsätze 38, 38' auf, die die Statorbleche der Finnen, die einen rechteckigen Querschnitt aufweisen, umschließen. Hierbei umschließen die Fortsätze 38, 38' die beiden Seitenflächen und die radial innenliegendes Enden der Finnen 14.

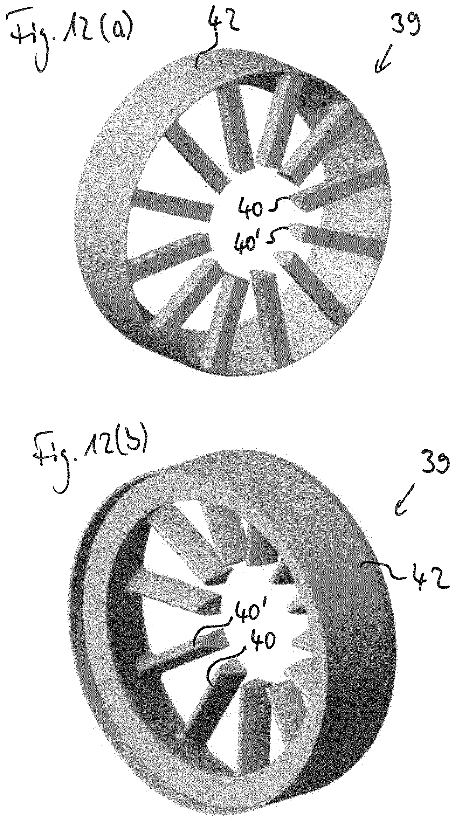

Figuren 12(a) und (b) zeigen eine Abströmkappe 39 in einer Vorderansicht (Betrachtung in Strömungsrichtung) und einer Rückansicht (Betrachtung entgegen der Strömungsrichtung). Die Abströmkappe 39 ist wie die Anströmkappe 37 als einstückiges, magnetisch inaktives, Kunststoffteil vorgefertigt und kann an weiteren Teilen des Medienspaltmotors befestigt werden. Die Abströmkappe 39 weist ein Ringelement 42 und Abströmkanten 40, 40' auf, die von dem Ringelement 42 nach innen erstrecken und die Finnen 14 auf der stromabwärtsliegenden Seite überdecken. Die Abströmkanten können in bevorzugten Ausführungen so ausgeführt werden, dass sie durch eine Schrägstellung einen Vordrall erzeugen, der sich vorteilhaft auf die Verdichterkennlinien auswirkt. Die Abströmkanten 40, 40' sind nicht hohl ausgeführt.

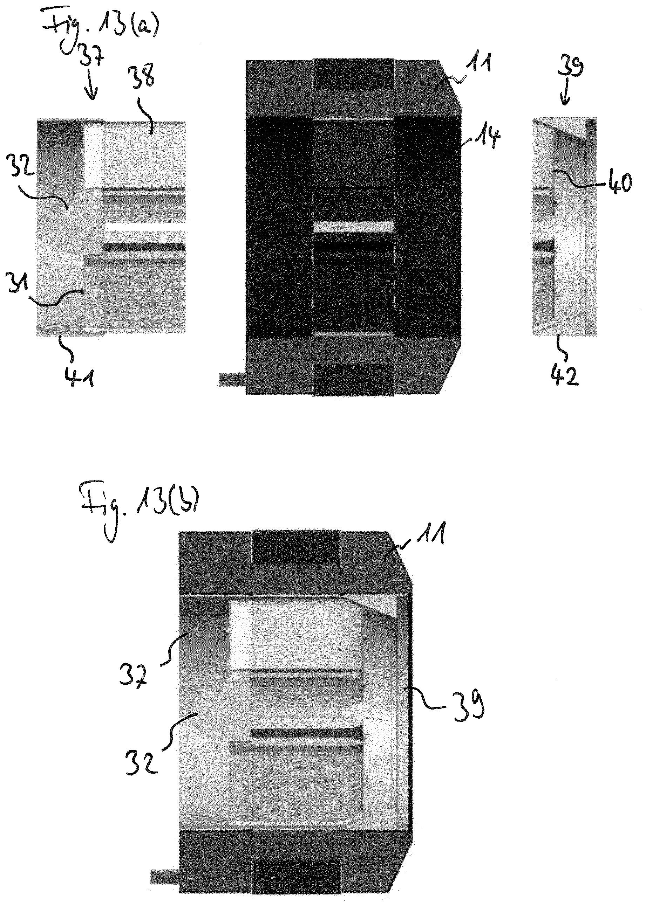

Wie Fign. 13(a) und (b) illustrieren, können die Anströmkappe 37 und die Abströmkappe 39 als vorgefertigte Teile in axialer Richtung aufeinander zu in den Stator eingeschoben werden, derart, dass die Fortsätze 38, 38' die Statorbleche der Finnen 14 hülsenartig umgeben.

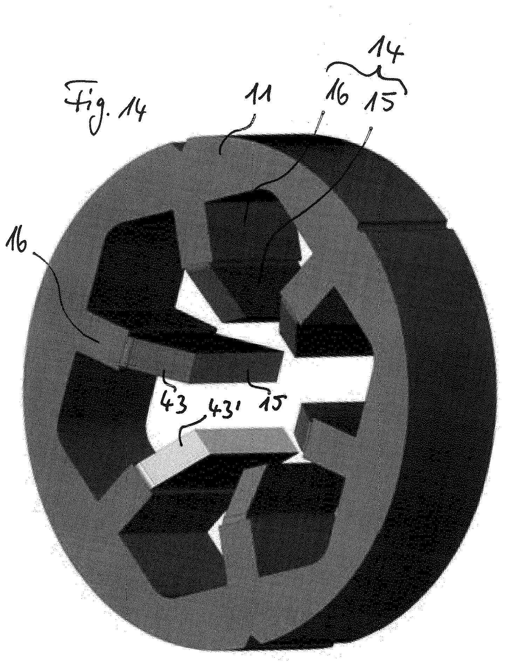

Figur 14 zeigt die Statorbleche gekröpfter Finnen 14 gemäß einer Ausführungsform. Die Statorbleche der Finnen 14 sind aus gestanzten Einzelblechen gefertigt und in dem gezeigten Beispiel einstückig mit dem Jochring 11 ausgebildet. Die Einzelbleche liegen hierbei in axialer Richtung gestapelt übereinander. Zu erkennen ist, dass die äußeren Abschnitte 16 der Finnen 14 und die inneren Abschnitte 15 der Finnen 14 einen rechteckigen Querschnitt aufweisen. Die äußeren Abschnitte 16 der Finnen 14 haben einen in radialer Richtung gleichbleibenden Querschnitt. Eine Querschnittsfläche der Finnen 14 nimmt vom äußeren Abschnitt 16 zum inneren Abschnitt 15 stufenartig ab. Eine Querschnittsfläche der inneren Abschnitte 15 der Finnen 14 nimmt kontinuierlich in radial nach innen gerichteter Richtung dadurch ab, dass auf der stromaufwärtsliegenden Seite der inneren Abschnitte 15 der Finnen 14 angeschrägte Flächen 43, 43' vorgesehen sind. Stromaufwärtsliegende Seiten der äußeren Abschnitte 16 der Finnen sind hingegen nicht angeschrägt und verlaufen quer zur axialen Richtung.

Lediglich in den Ausführungsbeispielen offenbarte Merkmale der verschiedenen Ausführungsformen können miteinander kombiniert werden.

## Patentansprüche

1. Medienspaltmotor, insbesondere für einen Turbolader (1), enthaltend einen Rotor (7) und einen Stator (9), wobei der Stator (9) Finnen (14) aufweist, die sich mit einem inneren Abschnitt (15) radial in einem zwischen dem Stator (9) und dem Rotor (7) ausgebildeten Strömungsraum (29) in Richtung des Rotors (7) erstrecken,
wobei
die Finnen (14) sich mit ihren inneren Abschnitten (15) nicht bis zum Rotor (7) erstrecken, sodass ein Spalt zwischen einem inneren Ende der Finnen (14) und dem Rotor (7) ausgebildet ist,
**dadurch gekennzeichnet, dass**
ein Innendurchmesser (35) der Finnen (14) zumindest einem 1,2-fachen und höchstens einem 3-fachen eines Außendurchmessers (36) des Rotors (7) entspricht,
wobei der Strömungsraum (29) in einem inneren Bereich durch den Rotor (7) begrenzt wird,
wobei die inneren Enden der Finnen (14) freistehend sind,
wobei ein größter Durchmesser des Strömungsraums (29) mindestens einem Zweifachen des Außendurchmessers des Rotors (7) beträgt und wobei der Rotor (7) einen Rotormagneten aufweist und die Finnen (14) einen axialen Überlapp mit dem Rotormagneten aufweisen.

2. Medienspaltmotor nach Anspruch 1, **dadurch gekennzeichnet, dass** der Innendurchmesser der Finnen (14) zumindest einem 1,4-fachen und höchstens einem 2-fachen des Außendurchmessers des Rotors (7) entspricht.

3. Medienspaltmotor nach einem der Ansprüche 1 oder 2, **dadurch gekennzeichnet, dass** im Strömungsraum zwischen den Finnen (14) Statornuten (22) derart ausgebildet sind, dass durch sie zumindest ein Teil eines Mediums strömt, beispielsweise **dadurch gekennzeichnet, dass** eine Ausdehnung der vom Medium durchströmten Statornuten (22) in radialer Richtung zumindest einem Viertel des Außendurchmessers des Rotors (7) entspricht.

4. Medienspaltmotor nach einem der Ansprüche 1 bis 3, **dadurch gekennzeichnet, dass** der Strömungsraum (29) zumindest teilweise oder auch vollständig durch den Spalt zwischen inneren Enden der Finnen (14) und dem Rotor (7), wobei dieser im Wesentlichen hohlzylindrisch ist, sowie durch Statornuten zwischen benachbarten Finnen (14) ausgebildet ist.

5. Medienspaltmotor nach einem der Ansprüche 1 bis 4, **dadurch gekennzeichnet, dass** die Finnen (14) einen äußeren Abschnitt (16) aufweisen, der sich in radialer Richtung außerhalb des Strömungsraums (29) erstreckt, wobei der Stator (9) Spulen (17) umfasst, die die äußeren Abschnitte (16) der Finnen (14) umlaufen.

6. Medienspaltmotor nach Anspruch 5, wobei die Spulen (17) und die äußeren Abschnitte (16) der Finnen (14) jenseits einer radialen Abdichtung des Strömungsraumes (29) angeordnet sind und/oder **dadurch gekennzeichnet, dass** sowohl die äußeren Abschnitte (16) der Finnen (14) als auch die inneren Abschnitte (15) der Finnen (14) einen Aktivteil eines magnetischen Kreises bilden und/oder **dadurch gekennzeichnet, dass** die Spulen (17) auf Spulenträgern (18) aufgenommen und gemeinsam mit den Spulenträgern (18) auf die äußeren Abschnitte (16) der Finnen (14) aufgeschoben sind und/oder **dadurch gekennzeichnet, dass** die äußeren Abschnitte (16) der Finnen (14) einstückig mit den inneren Abschnitten (15) ausgebildet sind.

7. Medienspaltmotor nach einem der Ansprüche 5 oder 6, **gekennzeichnet durch** einen Jochring (11), an dem die äußeren Abschnitte (16) der Finnen (14) befestigt sind.

8. Medienspaltmotor nach Anspruch 7, **dadurch gekennzeichnet, dass** die äußeren Abschnitte (16) der Finnen (14) über eine Steckverbindung mit dem Jochring (11) verbunden sind und/oder **dadurch gekennzeichnet, dass** die äußeren Abschnitte (16) der Finnen (14) über eine Schwalbenschwanzverbindung mit dem Jochring (11) verbunden sind und/oder **dadurch gekennzeichnet, dass** verschiedene Abschnitte des Jochrings (11), die mit unterschiedlichen Finnen (14) verbunden sind, über Gelenkverbindungen (13) miteinander verbunden sind.

9. Medienspaltmotor nach einem der Ansprüche 5 bis 8, **gekennzeichnet durch** Deckplatten (20), die zwischen den äußeren und den inneren Abschnitten (15, 16) jeweils benachbarter Finnen (14) angeordnet sind und einen Bereich des Strömungsraums (29) begrenzen, wobei die Deckplatten (20) zwischen den Spulen (17) des Stators (9) und dem Strömungsraum (29) angeordnet sind.

10. Medienspaltmotor nach Anspruch 9, **dadurch gekennzeichnet, dass** die benachbarten Finnen (14) sich axial erstreckende Nuten (19) aufweisen, in die die Deckplatten (20) eingeschoben, sind oder **dadurch gekennzeichnet, dass** die Deckplatten (20) einstückig mit den Finnen (14) ausgebildet sind, insbesondere derart, dass die Deckplatten (20) und die Finnen (14) einen einstückigen Finnenring (25) ausbilden.

11. Medienspaltmotor nach einem der Ansprüche 5 bis 10, **dadurch gekennzeichnet, dass** die äußeren Abschnitte (16) der Finnen (14) eine größere Breite aufweisen als die inneren Abschnitte (15) der Finnen (14) und/oder **dadurch gekennzeichnet, dass** die Spulen (17) durch eine entlang einer Kreislinie gekrümmte Wicklung gebildet werden.

12. Medienspaltmotor nach einem der Ansprüche 1 bis 11, **dadurch gekennzeichnet, dass** die Finnen (14) einen axialen Überstand mit dem Rotormagneten aufweisen und/oder **dadurch gekennzeichnet, dass** eine Länge des Rotormagneten eine Gesamtlänge der Finnen (14) in axialer Richtung übertrifft.

13. Medienspaltmotor nach einem der Ansprüche 1 bis 12, **gekennzeichnet durch** eine Strömungskappe (30, 30'), die in Bezug auf eine Strömungsrichtung vor dem Rotor (7) und insbesondere vor den Finnen (14) angeordnet ist,
wobei die Strömungskappe (30, 30') einen Anströmdom (32), der den Rotor (7) überdeckt, aufweist und/oder
wobei die Strömungskappe (30, 30') Anströmkanten (34), die vor den Finnen (14) angeordnet sind, aufweist.

14. Medienspaltmotor nach einem der Ansprüche 1 bis 13, **gekennzeichnet durch** eine Strömungskappe, die in axialer Richtung weitergeführt ist, um die Finnen teilweise oder vollständig zu umschließen, wobei die Strömungskappe Seitenflächen und/oder ein radial innenliegendes Ende der Finnen umschließt, und/oder **gekennzeichnet durch** eine Strömungskappe, die in Bezug auf eine Strömungsrichtung hinter den Finnen angeordnet ist, wobei die Strömungskappe Abströmkanten aufweist, die hinter den Finnen angeordnet sind und/oder diese zumindest teilweise oder vollständig überdecken, und/oder **gekennzeichnet durch** eine Strömungskappe, die angewinkelte Abströmkanten aufweist, die in Bezug auf eine Strömungsrichtung hinter den Finnen angeordnet sind, zur Erzeugung eines Vordralls in einem Ansaugmedium.

15. Turbolader (1) für Verbrennungskraftmotoren mit einer Verdichteranordnung zur Verdichtung von Frischluft, wobei der Turbolader einen Medienspaltmotor nach einem der Ansprüche 1 bis 14 und ein Verdichterrad (6) enthält, wobei der Rotor (7) mit dem Verdichterrad (6) gekoppelt ist.

## Claims

1. A media gap motor, in particular for a turbocharger (1), including a rotor (7) and a stator (9), the stator (9) comprising fins (14) which extend by means of an inner portion (15) radially towards the rotor (7) in a flow chamber (29) formed between the stator (9) and the rotor (7),
wherein the fins (14) do not extend by means of their inner portions (15) as far as the rotor (7), and therefore a gap is formed between an inner end of the fins (14) and the rotor (7),
**characterized in that**
an internal diameter (35) of the fins (14) is at least 1.2 times and at most 3 times an external diameter (36) of the rotor (7),
wherein the flow chamber (29) is delimited in an inner region by the rotor (7),
whereby the inner ends of the fins (14) are free-standing,
wherein a maximum diameter of the flow chamber (29) is at least twice the external diameter of the rotor (7) andwherein the rotor (7) comprises a rotor magnet, wherein the fins (14) comprise an axial overlap with the rotor magnet.

2. The media gap motor according to claim 1, **characterized in that** the internal diameter of the fins (14) is at least 1.4 times and at most 2 times the external diameter of the rotor (7).

3. The media gap motor according to any one of claims 1 or 2, **characterized in that** stator slots (22) are formed in the flow chamber between the fins (14) such that at least part of a medium flows through them,for example **characterized in that** an extension of the stator slots (22) through which the medium flows in the radial direction is usually at least a quarter of the external diameter of the rotor (7).

4. The media gap motor according to any one of claims 1 to 3, **characterized in that** the flow chamber (29) is at least partially or completely formed by a gap between the inner ends of the fins (14) and the rotor (7), wherein the gap is essentially hollow-cylindrical, and by stator slots between adjacent fins (14).

5. The media gap motor according to any one of claims 1 to 4, **characterized in that** the fins (14) comprise an outer portion (16) extending radially outside the flow chamber (29), wherein the stator (9) comprises coils (17) surrounding the outer portions (16) of the fins (14).

6. The media gap motor according to claim 5, wherein the coils (17) and the outer portions (16) of the fins (14) are arranged beyond a radial seal of the flow chamber (29), and/or **characterized in that** both the outer portions (16) of the fins (14) and the inner portions (15) of the fins (14) form an active part of a magnetic circuit, and/or**characterized in that** the coils (17) are accommodated on coil carriers (18) and pushed onto the outer portions (16) of the fins (14) together with the coil carriers (18), and/or**characterized in that** the outer portions (16) of the fins (14) are formed in one piece with the inner portions (15).

7. The media gap motor according to any one of claims 5 or 6, **characterized by** a yoke ring (11) to which the outer portions (16) of the fins (14) are attached.

8. The media gap motor according to claim 7, **characterized in that** the outer portions (16) of the fins (14) are connected to the yoke ring (11) via a plug connection, and/or**characterized in that** the outer portions (16) of the fins (14) are connected to the yoke ring (11) via a dovetail connection, and/or**characterized in that** different portions of the yoke ring (11) which are connected to different fins (14) are connected to one another via articulated joints (13).

9. The media gap motor according to any one of claims 5 to 8, **characterized by** cover plates (20) which are arranged between the outer and inner portions (15, 16) of respectively adjacent fins (14) and delimit a region of the flow chamber (29), wherein the cover plates (20) are arranged between the coils (17) of the stator (9) and the flow chamber (29).

10. The media gap motor according to claim 9, **characterized in that** the adjacent fins (14) comprise axially extending grooves (19) into which the cover plates (20) are inserted, or **characterized in that** the cover plates (20) are formed in one piece with the fins (14), in particular such that the cover plates (20) and the fins (14) form a one-piece fin ring (25).

11. The media gap motor according to any one of claims 5 to 10, **characterized in that** the outer portions (16) of the fins (14) have a greater width than the inner portions (15) of the fins (14), and/or**characterized in that** the coils (17) are formed by a winding curved along a circular line.

12. The media gap motor according to any one of claims 1 to 11, **characterized in that** the fins (14) comprise an axial overhang with the rotor magnet, and/or**characterized in that** a length of the rotor magnet exceeds a total length of the fins (14) in the axial direction.

13. The media gap motor according to any one of claims 1 to 12, **characterized by** a flow cap (30, 30') arranged in front of the rotor (7) and in particular in front of the fins (14) with respect to a flow direction,
wherein the flow cap (30, 30') comprises an inflow dome (32) covering the rotor (7), and/or
wherein the flow cap (30, 30') comprises inflow edges (34) arranged in front of the fins (14).

14. The media gap motor according to any one of claims 1 to 13, **characterized by** a flow cap which is continued in the axial direction in order to partially or completely enclose the fins, wherein the flow cap encloses side surfaces and/or a radially inner end of the fins, and/or characterized bya flow cap arranged behind the fins with respect to a flow direction, wherein the flow cap comprises outflow edges which are arranged behind the fins and/or at least partially or completely cover said fins, and/or **characterized by** a flow cap comprising angled outflow edges arranged behind the fins with respect to a flow direction, for generating a pre-swirl in an intake medium.

15. A turbocharger (1) for internal combustion engines having a compressor arrangement for compressing fresh air, the turbocharger including a media gap motor according to any one of claims 1 to 14 and a compressor wheel (6), the rotor (7) being coupled to the compressor wheel (6).

## Revendications

1. Moteur à interstice pour fluide, en particulier pour un turbocompresseur (1), contenant un rotor (7) et un stator (9), le stator (9) comportant des ailettes (14) qui s'étendent au moyen d'une section intérieure (15) radialement dans la direction du rotor (7) dans une chambre d'écoulement (29) formée entre le stator (9) et le rotor (7),
les ailettes (14) ne s'étendant pas avec leurs sections intérieures (15) jusqu'au rotor (7), de sorte qu'un interstice est formé entre une extrémité intérieure des ailettes (14) et le rotor (7),
**caractérisé en ce que**
un diamètre intérieur (35) des ailettes (14) correspond à au moins 1,2 fois et au plus 3 fois un diamètre extérieur (36) du rotor (7),
la chambre d'écoulement (29) est délimitée par le rotor (7) dans une zone intérieure,
les extrémités intérieures des ailettes (14) sont isolées,
un diamètre plus grand de la chambre d'écoulement (29) est d'au moins deux fois le diamètre extérieur du rotor (7) et le rotor (7) présentant un aimant rotorique et les ailettes (14) présentant un chevauchement axial avec l'aimant rotorique.

2. Moteur à interstice pour fluide selon la revendication 1, **caractérisé en ce que** le diamètre intérieur des ailettes (14) correspond à au moins 1,4 fois et au plus 2 fois le diamètre extérieur du rotor (7).

3. Moteur à interstice pour fluide selon les revendications 1 ou 2, **caractérisé en ce que** des rainures de stator (22) sont formées dans la chambre d'écoulement entre les ailettes (14) de telle sorte qu'au moins une partie d'un fluide les traverse, par exemple **caractérisé en ce qu'**une étendue des rainures de stator (22) à travers lesquelles passe le fluide dans une direction radiale correspond au moins à un quart du diamètre extérieur du rotor (7).

4. Moteur à interstice pour fluide selon les revendications 1 à 3, **caractérisé en ce que** la chambre d'écoulement (29) est formée au moins partiellement ou alors complètement par l'interstice entre les extrémités intérieures des ailettes (14) et le rotor (7), celui-ci étant essentiellement en forme de cylindre creux, ainsi que par les rainures de stator entre des ailettes adjacentes (14).

5. Moteur à interstice pour fluide selon l'une des revendications 1 à 4, **caractérisé en ce que** les ailettes (14) présentent une section extérieure (16) qui s'étend dans une direction radiale à l'extérieur de la chambre d'écoulement (29), le stator (9) comprenant des bobines (17) qui circulent sur les sections extérieures (16) des ailettes (14).

6. Moteur à interstice pour fluide selon la revendication 5, dans lequel les bobines (17) et les sections extérieures (16) des ailettes (14) sont agencées au-delà d'un joint d'étanchéité radial de la chambre d'écoulement (29) et/ou **caractérisé en ce qu'**aussi bien les section extérieures (16) des ailettes (14) que les sections intérieures (15) des ailettes (14) forment une partie active d'un cercle magnétique et/ou **caractérisé en ce que** les bobines (17) sont logées sur des supports de bobine (18) et poussées conjointement sur les sections extérieures (16) des ailettes (14) avec les supports de bobines (18) et/ou **caractérisé en ce que** les sections extérieures (16) des ailettes (14) sont formées d'une seule pièce avec les sections intérieures (15).

7. Moteur à interstice pour fluide selon l'une des revendications 5 ou 6, **caractérisé par** un anneau de culasse (11) sur lequel sont fixées les sections extérieures (16) des ailettes (14).

8. Moteur à interstice pour fluide selon la revendication 7, **caractérisé en ce que** les sections extérieures (16) des ailettes (14) sont reliées à l'anneau de culasse (11) par l'intermédiaire d'un connecteur et/ou **caractérisé en ce que** les sections extérieures (16) des ailettes (14) sont reliées à l'anneau de culasse (11) par une liaison en queue d'aronde et/ou **caractérisé en ce que** différentes sections de l'anneau de culasse (11) reliées à différentes ailettes (14) sont reliées entre elles par des liaisons articulées (13).

9. Moteur à interstice pour fluide selon l'une des revendications 5 à 8, **caractérisé par** des plaques de recouvrement (20) qui sont agencées entre les sections extérieures et intérieures (15, 16) d'ailettes (14) adjacentes et délimitent une zone de la chambre d'écoulement (29), les plaques de recouvrement (20) étant agencées entre les bobines (17) du stator (9) et la chambre d'écoulement (29).

10. Moteur à interstice pour fluide selon la revendication 9, **caractérisé en ce que** les ailettes adjacentes (14) présentent des rainures (19) s'étendant axialement dans lesquelles les plaques de recouvrement (20) sont insérées, ou **caractérisé en ce que** les plaques de recouvrement (20) sont formées d'une seule pièce avec les ailettes (14), notamment de telle sorte que les plaques de recouvrement (20) et les ailettes (14) forment un anneau d'ailettes (25) d'une seule pièce.

11. Moteur à interstice pour fluide selon l'une des revendications 5 à 10, **caractérisé en ce que** les sections extérieures (16) des ailettes (14) présentent une plus grande largeur que les sections intérieures (15) des ailettes (14) et/ou **caractérisé en ce que** les bobines (17) sont formées par un enroulement courbé selon une ligne circulaire.

12. Moteur à interstice pour fluide selon l'une des revendications 1 à 11, **caractérisé en ce que** les ailettes (14) présentent un surplomb axial avec les aimants rotoriques et/ou **caractérisé en ce qu'**une longueur de l'aimant rotorique dépasse une longueur totale des ailettes (14) dans la direction axiale.

13. Moteur à interstice pour fluide selon l'une des revendications 1 à 12, **caractérisé par** un capuchon d'écoulement (30, 30') qui est agencé devant le rotor (7) et en particulier devant les ailettes (14) par rapport à une direction d'écoulement,
le capuchon d'écoulement (30, 30') présentant un dôme d'entrée (32) qui recouvre le rotor (7) et/ou
le capuchon d'écoulement (30, 30') présentant des bords d'attaque (34) qui sont agencés devant les ailettes (14).

14. Moteur à interstice pour fluide selon l'une des revendications 1 à 13, **caractérisé par** un capuchon d'écoulement qui est continu dans la direction axiale pour fermer les ailettes partiellement ou complètement, le capuchon d'écoulement fermant des surfaces latérales et/ou une extrémité radialement intérieure des ailettes, et/ou **caractérisé par** un capuchon d'écoulement, qui est agencé derrière les ailettes par rapport à une direction d'écoulement, le capuchon d'écoulement présentant des bords d'attaque qui sont agencés derrière les ailettes et/ou les recouvrent au moins partiellement ou complètement, et/ou **caractérisé par** un capuchon d'écoulement présentant des bords d'attaque inclinés, qui sont agencés derrière les ailettes par rapport à une direction d'écoulement pour produire un tourbillon dans un fluide d'admission.

15. Turbocompresseur (1) pour moteurs à combustion interne avec un agencement de compresseur pour comprimer de l'air frais, le turbocompresseur contenant un moteur à interstice pour fluide selon l'une des revendications 1 à 14 et une roue de compresseur (6), le rotor (7) étant couplé à la roue de compresseur (6).
